# FASCICULE DE BREVET EUROPEEN

(11) **EP 0 684 121 B1**
(45) Date de publication et mention de la délivrance du brevet: **27.01.1999**
(21) Numéro de dépôt: 95401222.5
(22) Date de dépôt: 24.05.1995
(51) Int. Cl.: B29C 47/00, B29C 55/00

(54) **Procédé de fabrication de produits extrudés en polytétrafluoréthylène (PFFE) poreux**
Verfahren zur Herstellung von extrudierten, porösen Gegenständen aus Polytetrafluoräthylen (PTFE)
Process for manufacturing extruded porous products from polytetrafluorethylene (PTFE)

(30) Priorité: 25.05.1994 FR 9406318
(43) Date de publication de la demande: 29.11.1995
(73) Titulaire: COMPAGNIE PLASTIC OMNIUM Société Anonyme dite:, 69007 Lyon (FR)
(72) Inventeur: Chaon, Régis, F-52200 Jorquenay (FR)
(74) Mandataire: Leszczynski, André

(56) Documents cités:
- EP-A- 0 415 140
- GB-A- 2 025 835
- US-A- 4 096 227
- US-A- 4 187 390
- DATABASE WPI Week 8637 Derwent Publications Ltd., London, GB; AN 86-241436 & JP-A-61 169 231 (NIPPON VALQUR K.K.) , 30 Juillet 1986
- PATENT ABSTRACTS OF JAPAN vol. 11 no. 321 (M-633) ,20 Octobre 1987 & JP-A-62 105623 (NIPPON VALQUR IND. LTD.)

## Description

La présente invention est relative à un procédé de fabrication de produits extrudés en polytetrafluorethylène (PTFE) poreux.

Il est connu de fabriquer des produits en PTFE, tels que des rubans, des profilés ou des tubes, par le procédé dit d'extrusion lubrifiée. Ce procédé consiste à mélanger de la poudre de PTFE, additionnée le cas échéant d'une charge, à un lubrifiant, pour réaliser une préforme compacte qui est soumise à un filage à la presse dans laquelle un piston refoule le PTFE, chargé ou non, à travers une filière, de manière à former un profilé tel qu'un ruban plat ou un jonc cylindrique, ou un tube lorsqu'un mandrin est disposé à la sortie de la filière. Le lubrifiant est ensuite éliminé, généralement par chauffage.

Le PTFE mis en oeuvre pour la réalisation de la préforme est du PTFE cru, c'est-à-dire du PTFE qui n'a jamais été soumis à une température dite "de frittage" qui est de l'ordre de 340°, température à laquelle la poudre de PTFE est soumise à un phénomène de gélification qui en augmente notamment la densité.

Le produit en PTFE cru, obtenu par mise en oeuvre du procédé d'extrusion lubrifié mentionné ci-dessus, est souvent, dans la pratique, soumis à un étirage de dédensification, puis le cas échéant, en fonction des applications, à une cuisson au-dessus de la température de frittage du PTFE.

L'étirage de dédensification réalisé sur le produit à l'état cru confère au produit une certaine microporosité ou porosité intrafibrillaire équivalant à des trous de l'ordre du micromètre.

Cette porosité peut être déterminée par le test de perméabilité gaz-air selon la norme DIN 53380 comme étant de l'ordre de 10⁴ cm³/(m².24h.bar).

Cette porosité se trouve réduite lorsque le produit formé de PTFE cru est chauffé, après l'étirage de dédensification, à une température supérieure à la température de frittage, une telle cuisson augmentant la densité du produit et en réduisant par conséquent la porosité.

Or, dans diverses applications, par exemple pour la réalisation de conduites destinées à véhiculer des fluides soumis à des hausses brutales de pression, il est souhaitable de disposer de produits en PTFE cuit présentant, pour atténuer les effets d'une telle hausse de pression une porosité élevée, c'est-à-dire une porosité équivalant à des trous de l'ordre de 0.05 mm, produits que l'on peut qualifier de macroporeux par rapport aux produits microporeux obtenus par étirage de dédensification à l'état cru, et qui sont cuits par chauffage prolongé à une température supérieure à la température de frittage du PTFE.

On peut qualifier de macroporeux des produits présentant une perméabilité gaz-air selon le test de la norme DIN 53380 mentionnée ci-dessus supérieure à 10⁹ cm³/(m².24h.bar).

Il est par ailleurs connu, pour augmenter la porosité de corps extrudés en PTFE, d'incorporer à de la poudre de PTFE, avant réalisation d'une préforme, des charges solubles ou évaporables qui laissent des interstices après leur élimination ultérieure.

Ainsi, il est possible d'obtenir du PTFE poreux en ajoutant à la poudre de PTFE du chlorure de sodium que l'on élimine après extrusion par dissolution dans de l'eau.

Il est également connu d'utiliser de la poudre de polyméthacrylate de méthyle que l'on élimine après extrusion par chauffage et évaporation.

L'utilisation de chlorure de sodium présente des inconvénients dans la mesure où il est, dans la pratique, très difficile d'éliminer ce produit en totalité.

L'utilisation du polyméthacrylate de méthyle présente pour sa part des dangers importants en cours de fabrication, du fait des vapeurs explosives susceptibles d'être produites lors du chauffage.

La présente invention se propose de fournir un procédé pour fabriquer des produits extrudés en PTFE, présentant une porosité plus importante que ceux précédemment obtenus et ce, sans présenter les inconvénients exposés ci-dessus liés à l'utilisation des charges solubles ou évaporables mentionnées.

On connaît par la demande de brevet GB-A-2 025 035 un procédé selon le préambule de la revendication 1.

Dans ce procédé, le lubrifiant est extrait du produit extrudé puis celui-ci est mis sous forme de rouleau.

Le produit provenant de ce rouleau est ensuite simultanément étiré et soumis à une température supérieure à la température de frittage, puis on le laisse refroidir et on le soumet à un post-traitement thermique.

On connaît par ailleurs par les brevets US-A-4 096 227 et US-A-4 187 390 des procédés dans lesquels le produit extrudé est d'abord étiré puis fritté.

Le procédé selon la présente invention vise à proposer un nouveau procédé pour réaliser un produit extrudé en PTFE macroporeux, notamment plus simple et plus économique que le procédé décrit dans la demande britannique GB-2 025 835.

Elle y parvient grâce aux caractéristiques énoncées dans la partie caractérisante de la revendication 1.

L'étirage qui est, selon la présente invention, réalisé sur le produit à l'état de gel, peut avantageusement être effectué dans un four dans lequel le produit est amené à passer à des vitesses différentielles entre l'entrée et la sortie, la vitesse à la sortie étant de préférence de 2 à 3 fois la vitesse de l'entrée du four.

Ces différences de vitesse peuvent être assurées par des moyens conventionnels tels que des tambours entraînés à des vitesses périphériques différentes.

Les charges susceptibles d'être mises en oeuvre avec le procédé selon l'invention, dans la mesure où elles ne doivent pas impérativement être éliminées, peuvent être de tous types appropriés en fonction de l'application envisagée.

On peut ainsi utiliser des particules organiques ou minérales présentant des dimensions appropriées, notamment de l'ordre de 5 à 30 µm.

On peut en particulier utiliser des billes de verre, dans une proportion de 5 à 20 % en poids de la poudre de PTFE cru soumise à l'extrusion lubrifiée, ou du sulfure de polyphénylène (PPS) micronisé dans une proportion de 5 à 15 % en poids du PTFE cru soumis à l'extrusion lubrifiée.

On peut également utiliser des particules de métaux, alliages et oxydes métalliques, tels que par exemple du cuivre, de l'alumine ou du bronze, ou encore des céramiques.

On va maintenant décrire ci-après deux exemples de mise en oeuvre du procédé selon la présente invention.

### Exemple 1

On prépare une préforme à l'aide d'un mélange ayant la composition suivante en poids :

| | |
|---|---|
| - poudre de PTFE cru naturel | 100 parties en poids, |
| - sulfure de polyphénylène micronisé | 7 parties en poids, |
| - Isopar (lubrifiant) | 20 parties en poids. |

Le moule de préforme présente un diamètre de 110 mm.

Sur cette préforme, on met en oeuvre un procédé d'extrusion lubrifiée avec une filière circulaire d'un diamètre de 8 mm à la sortie de laquelle est disposé un noyau ou mandrin central d'un diamètre extérieur de 5 mm.

La pression d'extrusion est de l'ordre de 200 kg/cm2 et l'avance du piston de 8 mm/mn.

Le tube en PTFE cru chargé de PPS micronisé est étiré dès la sortie de la filière à l'aide de rouleaux et amené à passer en continu dans un four à une température de 380°C.

Des rouleaux extracteurs sont prévus à la sortie du four.

Les vitesses périphériques des rouleaux d'entraînement sont déterminées de manière à soumettre le tube en PTFE chargé, maintenu à l'état de gel dans le four à un taux d'étirage de 300 %, le passage dans le four s'effectuant à une vitesse de 6 m/mn avec un temps de séjour dans le four de 120 s.

### Exemple 2

On prépare une préforme à l'aide d'un mélange ayant la composition suivante en poids :

| | |
|---|---|
| - poudre de PTFE naturel cru | 100 parties en poids |
| - billes de verre d'un diamètre de 5 à 30 µm | 6 parties en poids |
| - Isopar (lubrifiant) | 20 parties en poids |

On soumet ce mélange à une extrusion lubrifiée avec une filière présentant une fente de sortie de manière à extruder un ruban.

Ce ruban est soumis au même traitement combiné de chauffage au-dessus de la température de frittage et d'étirage, que le tube de l'exemple 1.

Bien que l'invention ait été décrite en liaison avec des exemples de réalisation particuliers, il est bien évident qu'elle n'y est nullement limitée et qu'on peut lui apporter différentes variantes et modifications sans pour autant sortir ni de son cadre ni de son esprit.

## Revendications

1. Procédé de fabrication de produits extrudés en polytétrafluorethylène (PTFE) poreux, dans lequel on réalise par extrusion lubrifiée un produit tel qu'un ruban ou profilé ou un tube en PTFE cru, additionné d'une charge, et dans lequel on soumet le produit extrudé simultanément à un chauffage à une température supérieure à la température du frittage du PTFE et à un étirage puis on le laisse refroidir jusqu'à la température ambiante avec maintien de la tension, caractérisé par le fait que l'on met en tension le produit extrudé à la sortie de la filière d'extrusion pour le soumettre audit chauffage et audit étirage simultanés.

2. Procédé selon la revendication 1, caractérisé par le fait que l'étirage est de l'ordre de 200 à 300 %.

3. Procédé selon l'une quelconque des revendications 1 et 2, caractérisé par le fait que la charge additionnée au PTFE cru, soumis à l'extrusion lubrifiée, est constituée de particules organiques ou minérales présentant des dimensions de l'ordre de 5 à 30 µm.

4. Procédé selon la revendication 3, caractérisé par le fait que ladite charge est constituée de billes de verre.

5. Procédé selon la revendication 3, caractérisé par le fait que ladite charge est constituée de sulfure de polyphénylène (PPS).

## Claims

1. Process for manufacturing extruded products made of porous polytetrafluoroethylene (PTFE), in which a product such as a tape or profile or a tube made of raw PTFE, to which a filler is added, is produced by lubricated extrusion and in which the extruded product is simultaneously subjected to heating to a temperature above the PTFE sintering temperature and to drawing, and is then left to cool down to room temperature with the tension still applied, characterized in that the extruded product is tensioned on leaving the extrusion die in order to subject it simultaneously to the said heating and to the said drawing.

2. Process according to Claim 1, characterized in that the drawing is about 200 to 300%.

3. Process according to either of Claims 1 and 2, characterized in that the filler added to the raw PTFE, subjected to the lubricated extrusion, consists of organic or mineral particles having a size of about 5 to 30 µm.

4. Process according to Claim 3, characterized in that the said filler consists of glass balls.

5. Process according to Claim 3, characterized in that the said filler consists of polyphenylene sulphide (PPS).

## Patentansprüche

1. Verfahren zur Herstellung von extrudierten Produkten aus porösem Polytetrafluorethylen (PTFE), durch Extrusion in Gegenwart von Gleitmitteln eines Bandes, Profils oder Rohrs aus rohem PTFE, das mit einem Füllstoffversetzt worden ist, und gemäß dem das extrudierte Produkt gleichzeitig auf eine Temperatur oberhalb der Sintertemperatur des PTFE erhitzt und verstreckt wird, wonach es unter Aufrechterhalten der Zugspannung auf Umgebungstemperatur abkühlen gelassen wird, dadurch gekennzeichnet, daß man das extrudierte Produkt am Ausgang des Extrusionsmundstücks unter Zugspannung setzt, um es dem gleichzeitigen Erhitzen und Verstrecken zu unterwerfen.

2. Verfahren nach Anspruch 1, dadurch gekennzeichnet, daß das Verstrecken im Bereich von 200 bis 300 % erfolgt.

3. Verfahren nach irgendeinem der Ansprüche 1 und 2, dadurch gekennzeichnet, daß der Füllstoff, der dem der Extrusionin Gegenwart von Gleitmitteln unterworfenen rohen PTFE zugesetzt wird, aus organischen oder anorganischen Teilchen mit Abmessungen im Bereich von 5 bis 30 µm gebildet ist.

4. Verfahren nach Anspruch 3, dadurch gekennzeichnet, daß der Füllstoff aus Glaskügelchen gebildet ist.

5. Verfahren nach Anspruch 3, dadurch gekennzeichnet, daß der Füllstoff aus Polyphenylensulfid (PPS) gebildet ist.
